**Europäisches Patentamt**

**European Patent Office**

**Office européen des brevets**

(11) Veröffentlichungsnummer : **0 200 778**
**B1**

(12) **EUROPÄISCHE PATENTSCHRIFT**

(45) Veröffentlichungstag der Patentschrift :
05.04.89

(51) Int. Cl.⁴ : **H 04 N    9/68**

(21) Anmeldenummer : **85905798.6**

(22) Anmeldetag : **30.10.85**

(86) Internationale Anmeldenummer :
**PCT/EP 85/00578**

(87) Internationale Veröffentlichungsnummer :
**WO/8603087 (22.05.86 Gazette 86/11)**

(54) SCHALTUNGSANORDNUNG FÜR FARBFERNSEHEMPFÄNGER ZUR KONTRAST- UND FARBSÄTTIGUNGSEINSTEL-LUNG.

(30) Priorität : **08.11.84 DE 3440806**

(43) Veröffentlichungstag der Anmeldung :
**12.11.86 Patentblatt 86/46**

(45) Bekanntmachung des Hinweises auf die Patenter-teilung : **05.04.89 Patentblatt 89/14**

(84) Benannte Vertragsstaaten :
**AT BE CH DE FR GB IT LI LU NL SE**

(56) Entgegenhaltungen :
**FR--A-- 2 386 949**
**Funkschau, issue 17, August 1977, München (DE), W. Baum: "Farbfernsehgerät mit Microprozessor-Steue-rung", pp. 763-768**

(73) Patentinhaber : **Deutsche Thomson-Brandt GmbH**
**Hermann-Schwer-Strasse 3 Postfach 1307**
**D-7730 Villingen-Schwenningen (DE)**

(72) Erfinder : **PERY, Antoine**
**Freiburgerstrasse 3/1**
**D-7730 Villingen-Schwenningen (DE)**
Erfinder : **RUFRAY, Jean-Claude**
**Hans-Thoma-Strasse 6**
**D-7734 Brigachtal (DE)**

## Beschreibung

Die Erfindung geht aus von einer Schaltungsanordnung für Farbfernsehempfänger mit einem Signalweg für das Helligkeitssignal und mit je einem Signalweg für die Farbsignale sowie Verstärkerstufen in den Signalwegen zur Einstellung von Kontrast, Helligkeit und Farbsättigung.

Bei Farbfernsehempfangsgeräten ist es allgemein üblich, die Farbsignale z. B. (R-Y) und (B-Y) und das Helligkeitssignal (Y) über steuerbare Verstärkerstufen zu führen. Mit Hilfe von Steuerspannungen kann die Helligkeit der Kontrast des Helligkeitssignals und die Farbsättigung des Farbsignals eingestellt werden. Die Steuerung kann dabei digital erfolgen, wobei bei z. B. 32 Einstellschritten ein 5-Bit-Wort genügt, aus welchem nach einer Digital-Analog-Wandlung ein entsprechendes analoges Stuersignal gewonnen wird. Damit die Farbsättigung, d. h. das Verhältnis von (B-Y)/Y bzw. (R-Y)/Y bei Änderung des Kontrastes im Helligkeitssignal konstant bleibt, ist es erforderlich bei Veränderung des Kontrastes im Helligkeitssignal in gleichem Maße auch die Farbsignale zu steuern. Das bedeutet, daß die drei Charakteristiken der Verstärker möglichst guten Gleichlauf besitzen müssen. Die Steuerung geschieht innerhalb der integrierten Schaltung dabei so, daß das digitale Wort Zellen anspricht, über welche Dämpfungsglieder ein- und abschaltbar sind. Jede dieser Zelle bedeutet innerhalb des integrierten Schaltkreises den Einsatz von vier Transistoren. Jede Zelle im Signalweg vermindert jedoch dessen Übertragungsbandbreite. Beim betrachteten Stand der Technik werden bei einer 5-Bit breiten Ansteuerung pro Verstärker fünf Zellen benötigt, d. h. für die die den Kontrast beeinflussenden Verstärkerstufen 3 × 5 = 15, für die Helligkeit 5 sowie für die Farbsättigung beeinflussenden Verstärkerstufen 2 × 5 = 10 zusammen also 30 Zellen.

Der Erfindung liegt die Aufgabe zugrunde, die soeben beschriebene Schaltung zu vereinfachen. Diese Aufgabe wird durch die im Patentanspruch angegebene Erfindung gelöst. Sie bringt den Vorteil, daß kein Gleichlauf von drei Verstärkerstufen mehr notwendig ist, da der Kontrast nur noch über den Weg des Helligkeitssignals gesteuert wird. Außerdem werden durch die Verringerung der Anzahl der Verstärkerstufen auch die von dem Mikroprozessor angesteuerte Anzahl von Zellen verringert, wodurch die Übertragungsbandbreite erhöht wird. Die Verringerung der Verstärker bedeutet bei der Herstellung der integrierten Schaltung auch eine Verringerung der Chip-Fläche.

Nachstehend sei die Erfindung an einem Ausführungsbeispiel mit Hilfe der Zeichnung näher erläutert.

Figur 1 zeigt eine Schaltungsanordnung nach dem bekannten Stand der Technik ;

Figur 2 zeigt ein die Erfindung beinhaltendes Ausführungsbeispiel.

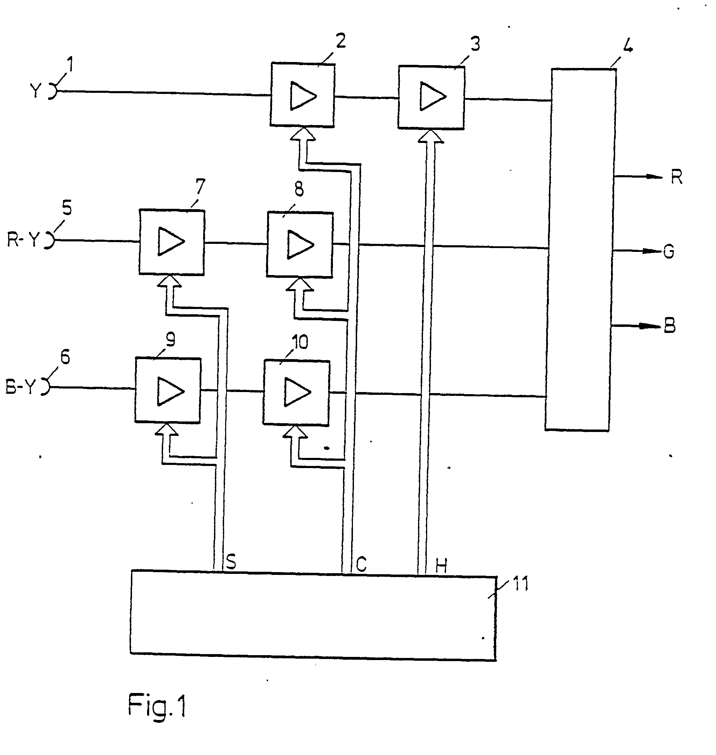

In Figur 1 ist eine bekannte Schaltungsanordnung dargestellt, wie sie in der integrierten Schaltung TCA 660 (VALVO Handbuch September 1975, Seite 241) verwirklicht ist und von der die Erfindung ausgeht. Ein dem Eingang 1 zugeführtes Helligkeitssignal Y wird über steuerbare Verstärkerstufen 2 und 3 an eine Matrixschaltung 4 geführt, welche in Verbindung mit Farbsignalen R-Y und B-Y die Ansteuersignale R, G und B für eine nicht näher dargestellte Bildwiedergaberöhre erzeugt. Die Farbdifferenzsignale R-Y und B-Y gelangen über die Eingänge 5 und 6 an in Serie geschaltete steuerbare Verstärkerstufen 7 und 8 sowie 9 und 10. Die Steuerbefehle zur Veränderung der Verstärkung der Verstärker werden von einer Steuereinheit 11 über z. B. 5-Bit breite Bus-Leitungen für die Einstellung der Helligkeit H, Kontrast C und Farbsättigung S abgegeben.

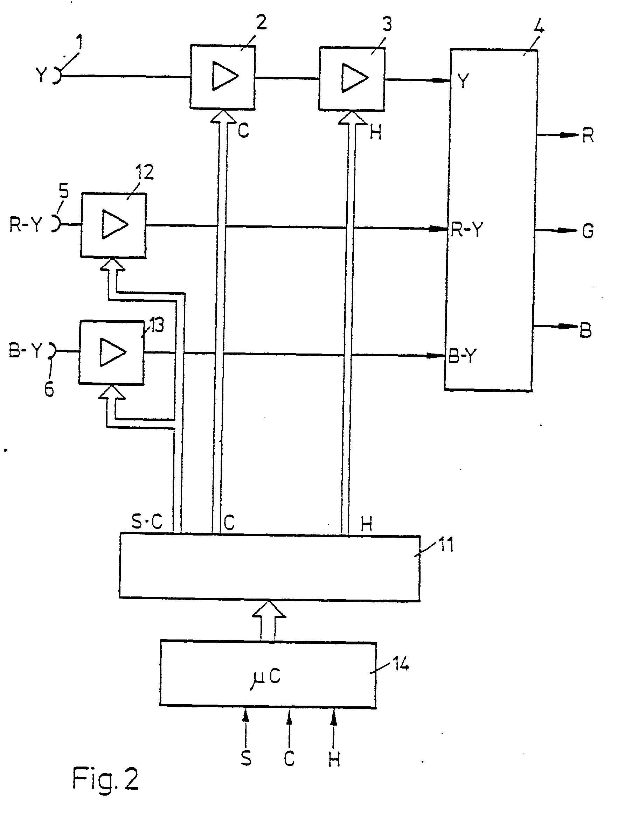

Mit Hilfe der Figur 2 wird nachstehend die Erfindung beschrieben. Die Schaltung nach Figur 1 vereinfacht sich dadurch, daß die Verstärkerstufen 7 und 8 sowie 9 und 10 jeweils zu einer zusammengefaßt sind. Es handelt sich um die in den Farbkanälen liegenden Verstärkerstufen 12 und 13. Diese beiden Verstärker werden von einem Mikroprozessor 14 über die Steuereinheit 11 derart gesteuert, daß bei Änderung der Einstellwerte für Sättigung und Kontrast die Verstärkung mit dem Produkt aus Sättigungseinstellung S und Kontrasteinstellung C verändert wird. Da das Steuersignal für die Verstärkerstufen 12 und 13 das Produkt aus dem Sättigungs- und dem Kontrasteinstellwert darstellt, ist das entsprechende Steuerwort breiter z. B. 6 Bit, womit 64 Stufen einstellbar sind. Gegenüber dem Stand der Technik werden somit nur 2 × 5 plus 2 × 6 d. h. 22 Zellen benötigt, d. h. es werden gegenüber der zuvor beschriebenen Anordnung acht Zellen mit je vier Transistoren, das bedeutet 32 Transistoren eingespart. Für jeden Farbkanal werden vier Zellen mit je vier Transistoren d. h. 16 Transistoren eingespart, wodurch die Übertragungsbandbreite verbessert wird.

## Patentansprüche

1. Digitale Schaltungsanordnung für Farbfernsehempfänger mit einem Signalweg für das Helligkeitssignal (Y) und mit je einem Signalweg für die Farbdifferenzsignale (B-Y) und (R-Y) sowie Verstärkerstufen in den Signalwegen zur Einstellung von Kontrast (C), Helligkeit (H) und Farbsättigung (S), dadurch gekennzeichnet, daß in die Signalwege für die Farbdifferenzsignale (B-Y) und (R-Y) je eine einzige Verstärkerstufe (12, 13) geschaltet ist, deren Verstärkungsgrad dem Produkt aus Verstärkungsfaktor für die Farbsättigung (S) im Farbsignalweg und dem Verstärkungsfaktor des im Helligkeitssignalweg eingestellten Kontrastes (C) entspricht.

2. Schaltungsanordnung nach Anspruch 1, dadurch gekennzeichnet, daß ein Mikroprozessor (14) für die Erzeugung der digitalen Steuersignale zur Einstellung der Verstärkerstufen (12, 13) und für die Bildung des Produktes aus dem digitalen Signal für den Kontrast und dem digitalen Signal für die Farbsättigung vorgesehen ist.

## Claims

1. Digital circuit arrangement for colour television receivers with one signal path for the brightness signal Y and with one signal path for each of the colour signals (B-Y) (R-Y), and amplifier stages in the signal paths for regulating the contrast C, brightness H and colour saturation S, characterised in that a single amplifier stage (12 or 13) is connected into the signal paths for the colour difference signals, of which amplifier stage the degree of amplification corresponds to the product of the amplification factor of colour saturation in the colour signal path and the amplification factor of the regulated contrast in the brightness signal path.

2. Circuit arrangement according to claim 1, characterised in that the digital control signals for regulating the amplifier stages are produced by a microprocessor, and that the formation of the product of the digital signal for the contrast and the digital signal for the colour saturation takes place in the microprocessor.

## Revendications

1. Montage pour un récepteur de télévision en couleurs, comportant une voie de transmission pour le signal de luminance Y et des voies respectives de transmission pour les signaux chromatiques (B-Y), (R-Y), ainsi que des étages amplificateurs disposés dans les voies de transmission des signaux afin de régler le contraste (C), la luminance (H) et la saturation des couleurs (S), caractérisé en ce que dans les voies de transmission des signaux chromatiques se trouve branché un seul étage amplificateur (12 ou 13), dont le degré d'amplification correspond au produit du facteur d'amplification pour la saturation des couleurs dans la voie de transmission des signaux chromatiques par le facteur d'amplification du contraste réglé dans la voie de transmission du signal de luminance.

2. Montage selon la revendication 1, caractérisé en ce que les signaux numériques de commande pour le réglage des étages amplificateurs sont produits par un microprocesseur et que la formation du produit du signal numérique pour le contraste par le signal numérique pour la saturation des couleurs s'effectue dans le microprocesseur.

Fig.1

Fig.2